# EUROPEAN PATENT SPECIFICATION

(11) **EP 3 044 917 B1**
(45) Date of publication and mention of the grant of the patent: **25.10.2017**
(21) Application number: 14771741.7
(22) Date of filing: 12.09.2014
(51) Int. Cl.: H04L 12/741, H04L 12/803, H04L 12/703, H04L 12/713

(54) **VIRTUAL NETWORK ROUTING**
VIRTUELLE NETZWERKLEITWEGLENKUNG
ROUTAGE DE RÉSEAU VIRTUEL

(30) Priority: 13.09.2013 US 201314026803
(43) Date of publication of application: 20.07.2016
(73) Proprietor: Microsoft Technology Licensing, LLC, Redmond, WA 98052 (US)
(72) Inventor: GARG, Pankaj, Redmond, Washington 98052-6399 (US); BONACI, Davor, Redmond, Washington 98052-6399 (US)
(74) Representative: Goddar, Heinz J.
(86) International application number: PCT/US2014/055284
(87) International publication number: WO 2015/038837

(56) References cited:
- US-A1- 2010 131 636
- US-A1- 2012 307 826
- US-A1- 2013 074 066
- Jose Barreto: "Using the multiple NICs of your File Server running Windows Server 2008 (and 2008 R2)", Internet article , 3 September 2010 (2010-09-03), pages 1-11, XP002733677, Retrieved from the Internet: URL:http://blogs.technet.com/b/josebda/arc hive/2010/09/03/using-the-multiple-nics-of -your-file-server-running-windows-server-2 008-and-2008-r2.aspx [retrieved on 2014-12-02]

## Description

### BACKGROUND

Virtualization allows for many computing environments to be implemented through software and/or hardware as virtual machines within a host computing device. A virtual machine may comprise its own file structure, virtual hard disks, operating system, applications, etc. As such, the virtual machine may function as a self-contained computing environment even though it may be an abstraction of underlying software and/or hardware resources. In this way, the host computing device may host a plurality of virtual machines.

US 2013/074066 A1 discloses a system for facilitating concurrent connectivity between a server and multiple routers, comprising a virtual switch configured to connect a first server to a first router, connect the first server to a second router, and route a communication packet associated with the first server through at least one of the first router or the second router based upon routing criteria.

"Jose Barreto: "Using the multiple NICs of your File Server running Windows Server 2008 (and 2008 R2)", Internet article, 3 September 2010 (2010-09.03), pages 1-11" discloses use of multiple Network Interface Cards (NICs). On special embodiment comprises a stand-alone file server, two NICs on the server, multiple subnets and a router.

The present invention provides a system according to claim 1 and a method according to claim 5.

The dependent claims relate to special embodiments thereof.

### SUMMARY

This summary is provided to introduce a selection of concepts in a simplified form that are further described below in the detailed description. This summary is not intended to identify key factors or essential features of the claimed subject matter, nor is it intended to be used to limit the scope of the claimed subject matter.

Among other things, one or more systems and/or techniques for connecting a virtual switch to multiple routers (e.g., multiple IP subnets, multiple networks, multiple leaf routers, etc.), for implementing a virtual router for IP address routing, and/or for MAC address overwite are provided herein.

In an example of connecting a virtual switch to multiple routers, the virtual switch connects a first server to a first router (e.g., a first leaf router of a Layer 3 network architecture). The first router corresponds to a first IP subnet. The virtual switch connects the first server to a second router (e.g., a second leaf router of the Layer 3 network architecture). The second router corresponds to a second IP subnet. It may be appreciated that the virtual switch may connect the first server to any number of routers. The virtual switch may be configured to route communication packets, associated with the first server, through the first router and/or the second router based upon routing criteria (e.g., load balancing routing criteria, fail-over routing criteria, etc.). For example, the virtual switch may route a data packet through the second router based upon the second router having more available routing resources in relation to the first router (e.g., the first router may have fewer available resources, such as bandwidth, than the second router based upon the first router currently undertaking a greater number of routing tasks). In another example, the virtual switch may route the data packet through the first router based upon a detected failure of the second router, or vice versa.

In an example of implementing a virtual router for IP address routing, a virtual router is hosted on a first server. The virtual router may establish a first connection between the first server and a first router (e.g., a first leaf router, having a first IP subnet, of a Layer 3 network architecture). The virtual router may establish a second connection between the first server and a second router (e.g., a second leaf router, having a second IP subnet, of the Layer 3 network architecture). It may be appreciated that the virtual router may connect the first server to any number of routers. The virtual router may route communication packets, associated with the first server, through at the first router and/or the second router to a destination based upon IP address routing (e.g., as opposed to MAC address forwarding). In an example, the virtual router may comprise a software implementation of routing functionality (e.g., IP address routing) that may otherwise be performed by a hardware router. For example, the software implementation of the routing functionality may be used to modify a virtual switch hosted on the first server to create the virtual router within the first server.

In an example of MAC address overwrite, a first connection is established between a first server and a first router (e.g., a first leaf router, having a first IP subnet, of a Layer 3 network architecture). A second connection may be established between the first server and a second router (e.g., a second leaf router, having a second IP subnet, of the Layer 3 network architecture). It may be appreciated that the first server may be connected to any number of routers. A communication packet associated with the first server may be received (e.g., received from a virtual machine hosted by the first server). A destination MAC address for the first router or the second router (e.g., a router selected based upon equal-cost multi-path (ECMP) distribution, load balancing routing criteria, fail-over routing criteria, and/or other routing criteria) may be inserted into the communication packet to create a modified communication packet. The modified communication packet may be forwarded to either the first router or the second router based upon the destination MAC address for delivery to a destination.

To the accomplishment of the foregoing and related ends, the following description and annexed drawings set forth certain illustrative aspects and implementations. These are indicative of but a few of the various ways in which one or more aspects may be employed. Other aspects, advantages, and novel features of the disclosure will become apparent from the following detailed description when considered in conjunction with the annexed drawings.

### DESCRIPTION OF THE DRAWINGS

Fig. 1 is a component block diagram illustrating an exemplary system for facilitating concurrent connectivity between a server and multiple routers by connecting a virtual switch to multiple routers.
Fig. 2 is a component block diagram illustrating an exemplary system for facilitating concurrent connectivity between a server and multiple routers by implementing a virtual router for IP address routing.
Fig. 3 is a flow diagram illustrating an exemplary method of facilitating concurrent connectivity between a server and multiple routers by implementing MAC address overwrite.
Fig. 4 is a component block diagram illustrating an exemplary system for facilitating concurrent connectivity between a server and multiple routers by implementing MAC address overwrite.
Fig. 5 is an illustration of an exemplary computer readable medium wherein processor-executable instructions configured to embody one or more of the provisions set forth herein may be comprised.
Fig. 6 illustrates an exemplary computing environment wherein one or more of the provisions set forth herein may be implemented.

### DETAILED DESCRIPTION

The claimed subject matter is now described with reference to the drawings, wherein like reference numerals are generally used to refer to like elements throughout. In the following description, for purposes of explanation, numerous specific details are set forth in order to provide an understanding of the claimed subject matter. It may be evident, however, that the claimed subject matter may be practiced without these specific details. In other instances, structures and devices are illustrated in block diagram form in order to facilitate describing the claimed subject matter.

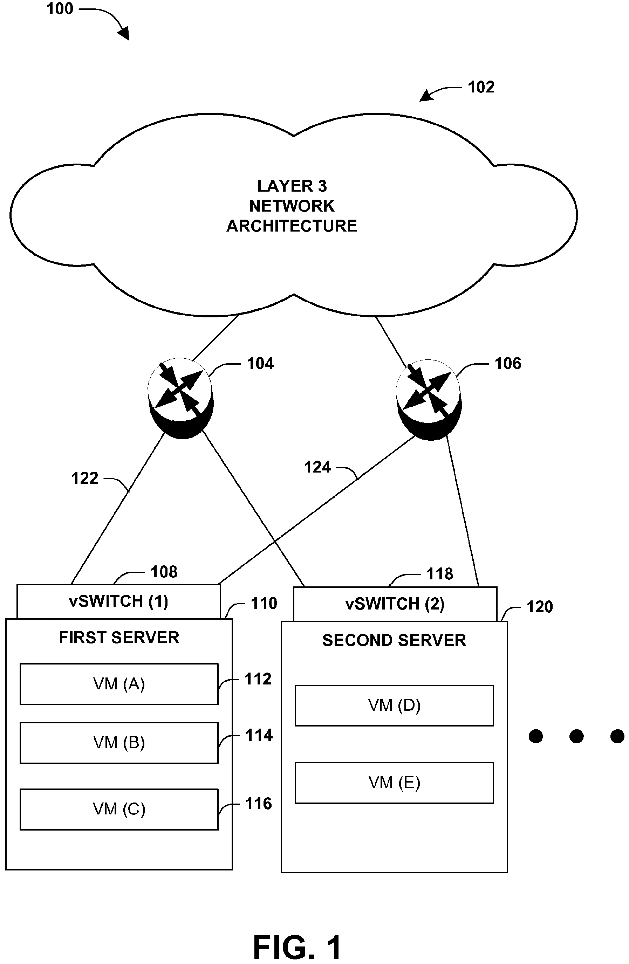

Fig. 1 illustrates an example of a system 100 for facilitating concurrent connectivity between a server and multiple routers. The system 100 may be associated with a network 102. In an example, the network 102 (e.g., implemented by a datacenter) may comprise a Layer 3 network architecture (e.g., comprising border routers, spine routers, leaf routers, etc.). The network 102 may comprise one or more routers, such as a first router 104 (e.g., a first leaf router), a second router 106 (e.g., a second leaf router), and/or other routers not illustrated. The first router 104 may be associated with a first IP subnet. The second router 106 may be associated with a second IP subnet different than the first IP subnet. In an example, the second IP subnet may be the same as the first IP subnet, such that the first router 104 and the second router 106 effectively have the same IP subnet.

One or more servers may be connected to the network 102 through virtual switches. For example, the system 100 may comprise one or more virtual switches, such as a first virtual switch 108 hosted by a first server 110, a second virtual switch 118 hosted by a second server 120, and/or other virtual switches not illustrated. The first virtual switch 108 may be configured to establish a first connection 122 between the first server 110 and the first router 104. The first virtual switch 108 may be configured to establish a second connection 124 between the first server 110 and the second router 106. The first virtual switch 108 may concurrently connect the first server 110 to the first router 104 and to the second router 106. The first virtual switch 108 may be configured to route communication packets associated with the first server through the first router 104 and/or the second router 106 based upon routing criteria such as a load balancing routing criteria, a fail-over routing criteria, etc. (e.g., communication between a virtual machine hosted by the first server, such as a virtual machine (A) 112, a virtual machine (B) 114, and/or a virtual machine (C) 116, etc., and a different server or virtual machine accessible through the network 102).

In an example of load balancing, the first virtual switch 108 may route a communication packet from the virtual machine (A) 112 to the second router 106 for delivery to a destination (e.g., a virtual machine (X) on a third server not illustrated) based upon the second router 106 having more available routing resources than the first router 104. In an example of fail-over, the first virtual switch 108 may route a communication packet from the virtual machine (C) 116 to the first router 104 for delivery to a destination based upon a detected failure of the second router 106. In this way, load balancing (e.g., bidirectional load balancing between two network adapters and/or leaf routers) and/or fail-over (e.g., transparent fail-over because leaf routers may advertise a server's IP subnets across a router network when a server is available) may be implemented within a Layer 3 network, such as across multiple IP subnets running on a server. Because a server may be connected to multiple external routers, communication packets may be routed using equal-cost multi-path (ECMP) strategies, for example.

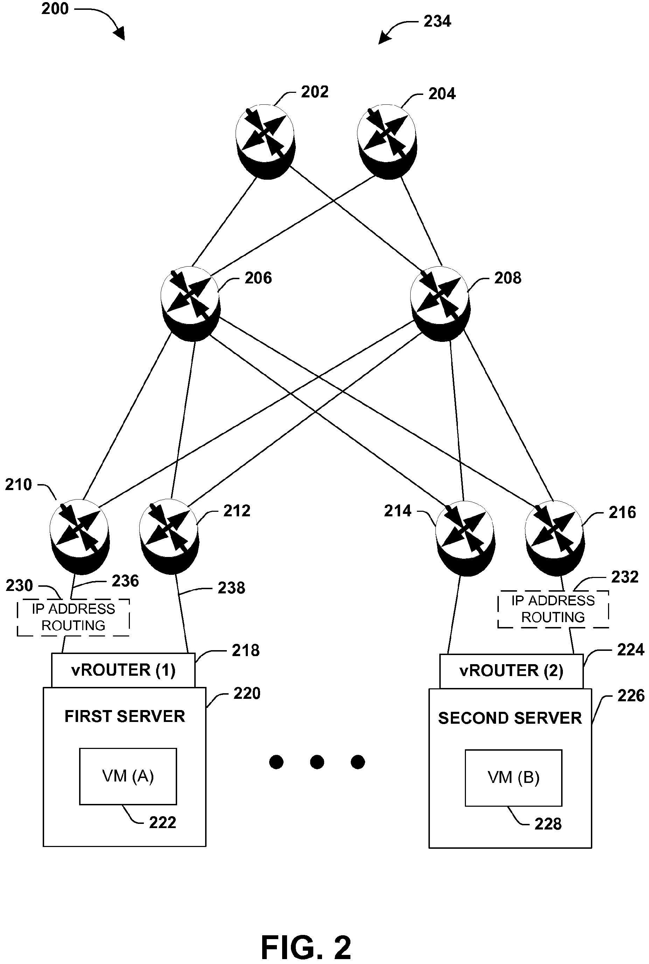

Fig. 2 illustrates an example of a system 200 for facilitating concurrent connectivity between a server and multiple routers. The system 200 may be associated with a network 234. In an example, the network 234 (e.g., implemented by a datacenter) may comprise a Layer 3 network architecture comprising a first border router 202, a second border router 204, a first spine router 206, a second spine router 208, a first leaf router (e.g., a first router 210), a second leaf router (e.g., a second router 212), a third leaf router (e.g., a third router 214, a fourth leaf router (e.g., a fourth router 216), and/or other network equipment not illustrated. In an example, the leaf routers may be associated with different IP subnets (e.g., the first router 210 may be associated with a first IP subnet, the second router 212 may be associated with a second IP subnet, etc.).

The system 200 may comprise one or more virtual routers, such as a first virtual router 218 hosted by a first server 220, a second virtual router 224 hosted by a second server 226, and/or other virtual routers not illustrated. The first virtual router 218 may be configured to establish a first connection 236 between the first server 220 and the first router 210. The first virtual router 218 may be configured to establish a second connection 238 between the first server 220 and the second router 212. In an example, the first virtual router 218 may comprise a software implementation of routing functionality (e.g., IP address routing, as opposed to MAC address forwarding) that may be used to route communication packets associated with the first server 220 through the first router 210 and/or the second router 212. For example, the first virtual router 218 may be implemented and/or hosted within the first server 220, and thus may perform routing functionality that may otherwise be provided by costly external routing hardware. In an example, a virtual router, such as the first virtual router 218, may be assigned an IP address, and may be configured as a "next hop" for a server's IP subset at one or more leaf routers, such as the first router 210 and/or the second router 212.

In an example, the first virtual router 218 may receive a communication packet associated with the first server 220. For example, the communication packet may be received from a virtual machine (A) 222 hosted by the first server 220, and may have a destination of a virtual machine (B) 228 hosted by the second server 226. The first virtual router 218 may route the communication packet through the first router 210 and/or the second router 212 based upon IP address routing. For example, the first virtual router 218 may route the communication packet through the first router 210 along the first connection 236 based upon IP address routing 230 (e.g., utilizing a routing table and/or other IP-based routing techniques). In an example, the first virtual router 218 may route the communication packet based upon various routing criteria, such as load balancing routing criteria and/or fail-over routing criteria. In an example, the communication packet is routed through the network 234 to the fourth router 216 connected to the second server 226. The fourth router 216 may route the communication packet to the second virtual router 224 based upon IP address routing 232. The second virtual router 224 may deliver the communication packet to the virtual machine (B) 228 hosted on the second server 226.

In this way, a virtual router (e.g., hosted within a server, such as packaged into a virtual switch hosted by the server) may implement routing functionality and/or behavior of an external router through software. The virtual router may implement load balancing (e.g., bidirectional load balancing between two network adapters and/or leaf routers) and/or fail-over (e.g., transparent failover because leaf routers may advertise a server's IP subnets across a router network when a server is available) within a Layer 3 network, such as across multiple IP subnets running on a server. Because a server may be connected to multiple external routers, communication packets may be routed using equal-cost multi-path (ECMP) strategies, for example.

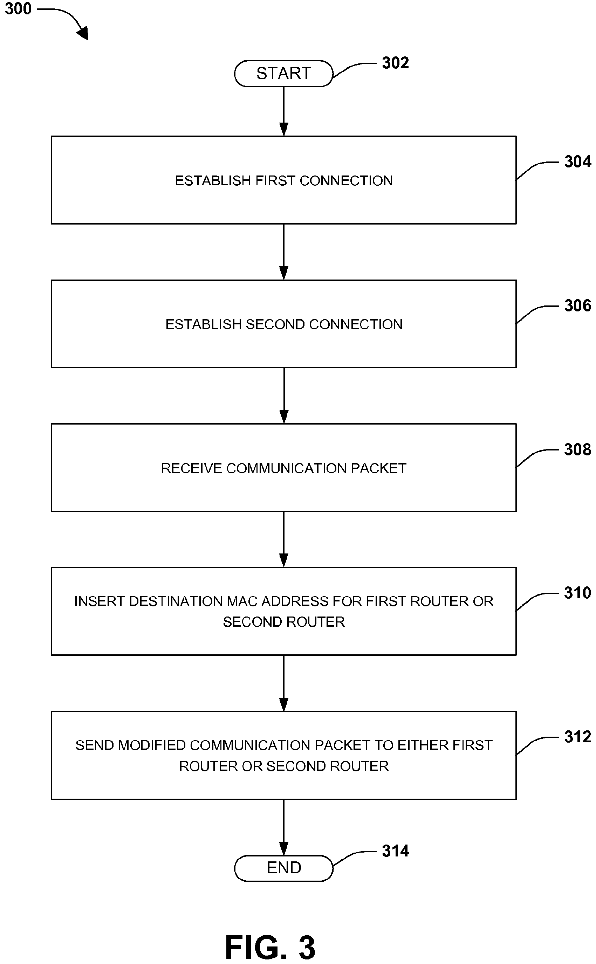

An embodiment of facilitating concurrent connectivity between a server and multiple routers is illustrated by an exemplary method 300 of Fig. 3. At 302, the method starts. In an example, a first server may be associated with a network, such as a Layer 3 network architecture of a data center. The first server may host one or more virtual machines. In an example, the first server may host a teaming mode component (e.g., a virtual router comprising Layer 3 teaming mode functionality hosted within NIC teaming software executing under a virtual switch hosted within the first server). The first server may be configured with a first IP subnet as on-link with respect to a first router and/or a second router of the network (e.g., a first leaf router and/or a second leaf router of the Layer 3 network architecture). Accordingly, communication packets associated with the first server may be routed (e.g., by the teaming mode component hosted on the first server) through the first router, the second router, and/or other routers.

At 304, a first connection may be established between the first server and the first router. At 306, a second connection may be established between the first server and the second router. At 308, a communication packet associated with the first server may be received. In an example, the communication packet may be associated with a first virtual machine hosted by the first server. At 310, a destination MAC address for the first router or the second router (e.g., or other router) is inserted into the communication packet to create a modified communication packet. In an example, a placeholder destination MAC address within the communication packet is overwritten with the destination MAC address. In an example, a determination as to whether to utilize the first router or the second router may be made based upon an equal-cost multi-path (ECMP) distribution utilizing a Layer 3 teaming mode associated with the Layer 3 network architecture. In an example, the first router or the second router may be identified for utilization based upon routing criteria, such as load balancing routing criteria, fail-over routing criteria, and/or other routing criteria. In an example, the destination MAC address may be identified utilizing an address resolution protocol (ARP) broadcast for the selected router.

At 312, the modified communication packet is sent (e.g., forwarded) to either the first router or the second router based upon the destination MAC address. For example, the destination MAC address may correspond to the second router based upon the second router having more available routing resources than the first router (e.g., selected based upon a load balancing criteria), and thus the modified communication packet may be forwarded to the second router. In this way, the second router receives the modified communication packet. The second router may be invoked to replace the destination MAC address with a MAC address associated with a destination (e.g., a final destination, such as a second virtual machine hosted by a second server connected to the network). The second router may deliver the modified communication packet to the destination (e.g., the second router may utilize an ARP broadcast to identify direct delivery information for the second virtual machine). In this way, routers, such as leaf routers, may have direct visibility to virtual machines hosted by servers, and may thus send communication packets directly to virtual machines (e.g., because different MAC addresses may be used to reference different virtual machines). For example, virtual machine queue (VMQ) and/or single root I/O virtualization (SR-IOV) may be able to rely upon incoming communication packets having different destination MAC addresses, while providing IP routing in a physical fabric, providing resiliency against fail-over (e.g., selecting an active leaf router over a failed leaf router), and/or providing multipath I/O and load distribution (e.g., between multiple leaf routers connected to a server). In an example, MAC address offloading may be facilitated with respect to a virtual router associated with the first server. In an example of communication from a router (e.g., a leaf router), to the first server, the router may insert a network interface controller (NIC) MAC address, corresponding to a NIC component comprised within the first server, into a communication packet for delivery from the first router to the first server. In this way, the router may deliver the communication packet to the NIC component of the first server based upon the NIC MAC address.

In an example, migration of a virtual machine between servers connected to different routers, such as leaf routers, may be facilitated. For example, the first virtual machine on the first server (e.g., associated with a first IP subnet) connected to the first router and the second router may be migrated to a second server (e.g., associated with a second IP subnet) connected to a third router and a fourth router. Responsive to identifying the migration, a routing protocol message (e.g., a boarder gateway protocol (BGP), an open shortest path first (OSPF) protocol, etc.) may be utilized to notify one or more routers, such as leaf routers, of the migration (e.g., a routing protocol message may specify a location of an IP address associated with the first virtual machine on the second server). In this way, routers may be updated with new locational information for migrated virtual machines. At 314, the method ends.

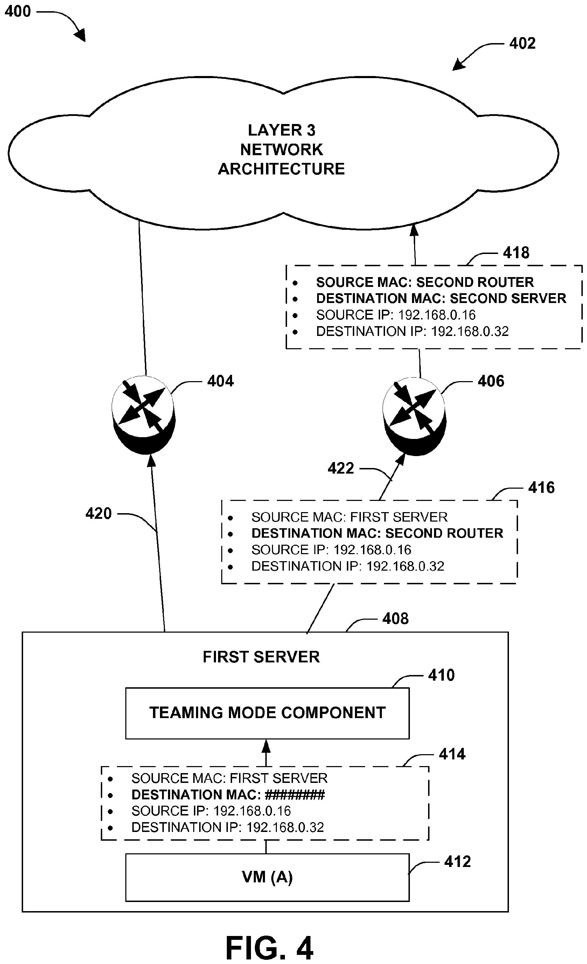

Fig. 4 illustrates an example of a system 400 for facilitating concurrent connectivity between a server and multiple routers. The system 400 comprises a teaming mode component 410. In an example, the teaming mode component 410 may be hosted on a first server 408 connected to a network 402, such as a Layer 3 network architecture. In an example, the teaming mode component 410 may be implemented as a Layer 3 teaming mode inside NIC teaming software running under a virtual switch hosted by the first server 408. The teaming mode component 410 may be configured to establish a first connection 420 between the first server 408 and a first router 404 (e.g., a first leaf router). The teaming mode component 410 may be configured to establish a second connection 422 between the first server 408 and a second router 406 (e.g., a second leaf router). The teaming mode component 410 may be configured to route communication packets through the first router 404 and/or the second router 406 based upon an equal-cost multi-path (ECMP) distribution and/or based upon routing criteria (e.g., load balancing routing criteria, fail-over routing criteria, etc.).

In an example, the first server 408 comprises a virtual machine (A) 412 having a source IP address 192.168.0.16. The virtual machine (A) 412 may create a communication packet 414 that is to be delivered to a destination having a destination IP address 192.168.0.32 (e.g., a virtual machine (B) hosted by a second server connected to the network 402). The communication packet 414 may specify the source IP address and the destination IP address. The communication packet 414 may specify a placeholder destination MAC address (e.g., a dummy MAC address represented by ########). The communication packet 414 may specify a source MAC address as the first server 408.

The teaming mode component 410 may receive the communication packet 414. The teaming mode component 410 may determine whether the communication packet 414 is to be forwarded to the first router 404 or the second router 406 based upon ECMP distribution and/or routing criteria. For example, the teaming mode component 410 may determine that the communication packet 414 is to be forwarded to the second router 406 (e.g., based upon the second router 406 having more available routing resources than the first router 404). The teaming mode component 410 may identify a destination MAC address for the second router 406 (e.g., utilizing an address resolution protocol (ARP) broadcast message). The teaming mode component 410 may overwrite the placeholder destination MAC address within the communication package 414 with the destination MAC address of the second router 406 to create a modified communication package 416. The teaming mode component 410 may forward the modified communication package 416 to the second router 406 along the second connection 422. In an example, the second router 406 is invoked to replace the destination MAC address with a MAC address associated with the final destination (e.g., utilizing an ARP broadcast message to identify the second server hosting the virtual machine (B)) and/or update the source MAC address (e.g., with a MAC address of the second router 406) to create a deliverable communication packet 418. In this way, the deliverable communication packet 418 may be delivered to the destination, such as the virtual machine (B).

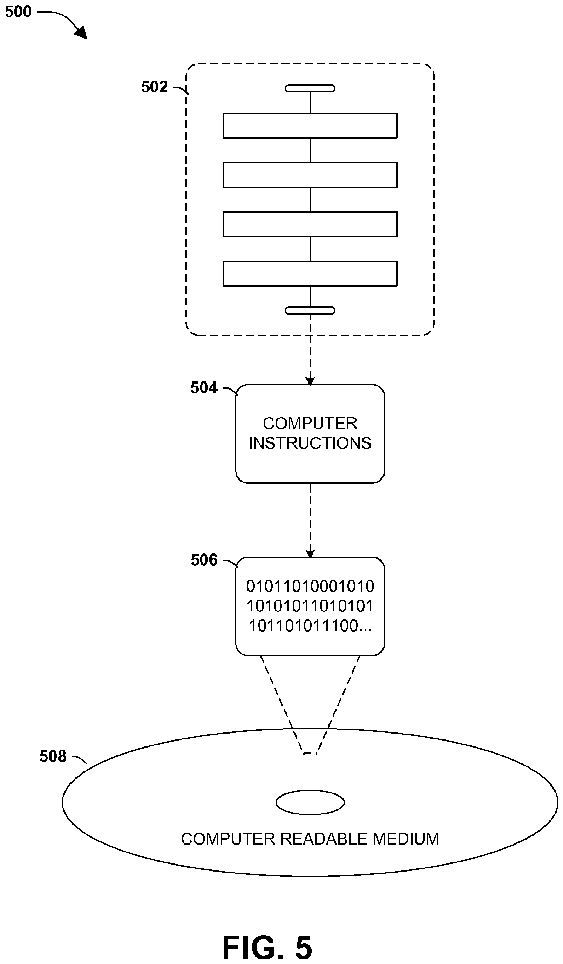

Still another embodiment involves a computer-readable medium comprising processor-executable instructions configured to implement one or more of the techniques presented herein. An example embodiment of a computer-readable medium or a computer-readable device is illustrated in Fig. 5, wherein the implementation 500 comprises a computer-readable medium 508, such as a CD-R, DVD-R, flash drive, a platter of a hard disk drive, etc., on which is encoded computer-readable data 506. This computer-readable data 506, such as binary data comprising at least one of a zero or a one, in turn comprises a set of computer instructions 504 configured to operate according to one or more of the principles set forth herein. In some embodiments, the processor-executable computer instructions 504 are configured to perform a method 502, such as at least some of the exemplary method 300 of Fig. 3, for example. In some embodiments, the processor-executable instructions 504 are configured to implement a system, such as at least some of the exemplary system 100 of Fig. 1, at least some of the exemplary system 200 of Fig. 2, and/or at least some of the exemplary system 400 of Fig. 4, for example. Many such computer-readable media are devised by those of ordinary skill in the art that are configured to operate in accordance with the techniques presented herein.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing at least some of the claims.

As used in this application, the terms "component," "module," "system", "interface", and/or the like are generally intended to refer to a computer-related entity, either hardware, a combination of hardware and software, software, or software in execution. For example, a component may be, but is not limited to being, a process running on a processor, a processor, an object, an executable, a thread of execution, a program, and/or a computer. By way of illustration, both an application running on a controller and the controller can be a component. One or more components may reside within a process and/or thread of execution and a component may be localized on one computer and/or distributed between two or more computers.

Furthermore, the claimed subject matter may be implemented as a method, apparatus, or article of manufacture using standard programming and/or engineering techniques to produce software, firmware, hardware, or any combination thereof to control a computer to implement the disclosed subject matter. The term "article of manufacture" as used herein is intended to encompass a computer program accessible from any computer-readable device, carrier, or media. Of course, many modifications may be made to this configuration without departing from the scope or spirit of the claimed subject matter.

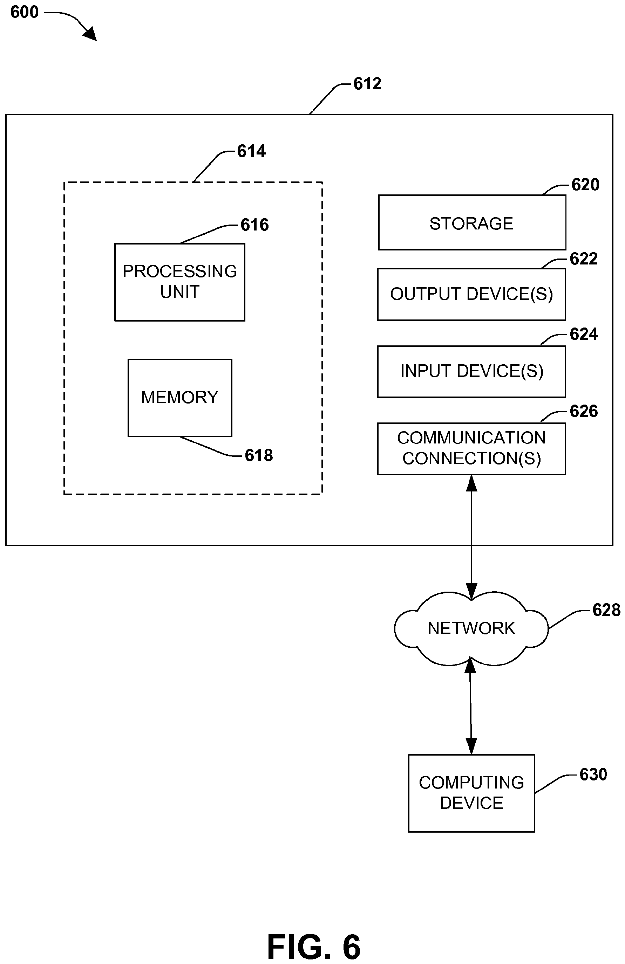

Fig. 6 and the following discussion provide a brief, general description of a suitable computing environment to implement embodiments of one or more of the provisions set forth herein. The operating environment of Fig. 6 is only one example of a suitable operating environment and is not intended to suggest any limitation as to the scope of use or functionality of the operating environment. Example computing devices include, but are not limited to, personal computers, server computers, hand-held or laptop devices, mobile devices (such as mobile phones, Personal Digital Assistants (PDAs), media players, and the like), multiprocessor systems, consumer electronics, mini computers, mainframe computers, distributed computing environments that include any of the above systems or devices, and the like.

Although not required, embodiments are described in the general context of "computer readable instructions" being executed by one or more computing devices. Computer readable instructions may be distributed via computer readable media (discussed below). Computer readable instructions may be implemented as program modules, such as functions, objects, Application Programming Interfaces (APIs), data structures, and the like, that perform particular tasks or implement particular abstract data types. Typically, the functionality of the computer readable instructions may be combined or distributed as desired in various environments.

Fig. 6 illustrates an example of a system 600 comprising a computing device 612 configured to implement one or more embodiments provided herein. In one configuration, computing device 612 includes at least one processing unit 616 and memory 618. Depending on the exact configuration and type of computing device, memory 618 may be volatile (such as RAM, for example), non-volatile (such as ROM, flash memory, etc., for example) or some combination of the two. This configuration is illustrated in Fig. 6 by dashed line 614.

In other embodiments, device 612 may include additional features and/or functionality. For example, device 612 may also include additional storage (e.g., removable and/or non-removable) including, but not limited to, magnetic storage, optical storage, and the like. Such additional storage is illustrated in Fig. 6 by storage 620. In one embodiment, computer readable instructions to implement one or more embodiments provided herein may be in storage 620. Storage 620 may also store other computer readable instructions to implement an operating system, an application program, and the like. Computer readable instructions may be loaded in memory 618 for execution by processing unit 616, for example.

The term "computer readable media" as used herein includes computer storage media. Computer storage media includes volatile and nonvolatile, removable and non-removable media implemented in any method or technology for storage of information such as computer readable instructions or other data. Memory 618 and storage 620 are examples of computer storage media. Computer storage media includes, but is not limited to, RAM, ROM, EEPROM, flash memory or other memory technology, CD-ROM, Digital Versatile Disks (DVDs) or other optical storage, magnetic cassettes, magnetic tape, magnetic disk storage or other magnetic storage devices, or any other medium which can be used to store the desired information and which can be accessed by device 612. Any such computer storage media may be part of device 612.

Device 612 may also include communication connection(s) 626 that allows device 612 to communicate with other devices. Communication connection(s) 626 may include, but is not limited to, a modem, a Network Interface Card (NIC), an integrated network interface, a radio frequency transmitter/receiver, an infrared port, a USB connection, or other interfaces for connecting computing device 612 to other computing devices. Communication connection(s) 626 may include a wired connection or a wireless connection. Communication connection(s) 626 may transmit and/or receive communication media.

The term "computer readable media" may include communication media. Communication media typically embodies computer readable instructions or other data in a "modulated data signal" such as a carrier wave or other transport mechanism and includes any information delivery media. The term "modulated data signal" may include a signal that has one or more of its characteristics set or changed in such a manner as to encode information in the signal.

Device 612 may include input device(s) 624 such as keyboard, mouse, pen, voice input device, touch input device, infrared cameras, video input devices, and/or any other input device. Output device(s) 622 such as one or more displays, speakers, printers, and/or any other output device may also be included in device 612. Input device(s) 624 and output device(s) 622 may be connected to device 612 via a wired connection, wireless connection, or any combination thereof. In one embodiment, an input device or an output device from another computing device may be used as input device(s) 624 or output device(s) 622 for computing device 612.

Components of computing device 612 may be connected by various interconnects, such as a bus. Such interconnects may include a Peripheral Component Interconnect (PCI), such as PCI Express, a Universal Serial Bus (USB), firewire (IEEE 1394), an optical bus structure, and the like. In another embodiment, components of computing device 612 may be interconnected by a network. For example, memory 618 may be comprised of multiple physical memory units located in different physical locations interconnected by a network.

Those skilled in the art will realize that storage devices utilized to store computer readable instructions may be distributed across a network. For example, a computing device 630 accessible via a network 628 may store computer readable instructions to implement one or more embodiments provided herein. Computing device 612 may access computing device 630 and download a part or all of the computer readable instructions for execution. Alternatively, computing device 612 may download pieces of the computer readable instructions, as needed, or some instructions may be executed at computing device 612 and some at computing device 630.

Various operations of embodiments are provided herein. In one embodiment, one or more of the operations described may constitute computer readable instructions stored on one or more computer readable media, which if executed by a computing device, will cause the computing device to perform the operations described. The order in which some or all of the operations are described should not be construed as to imply that these operations are necessarily order dependent. Alternative ordering will be appreciated by one skilled in the art having the benefit of this description. Further, it will be understood that not all operations are necessarily present in each embodiment provided herein. Also, it will be understood that not all operations are necessary in some embodiments.

Further, unless specified otherwise, "first," "second," and/or the like are not intended to imply a temporal aspect, a spatial aspect, an ordering, etc. Rather, such terms are merely used as identifiers, names, etc. for features, elements, items, etc. For example, a first object and a second object generally correspond to object A and object B or two different or two identical objects or the same object.

Moreover, "exemplary" is used herein to mean serving as an example, instance, illustration, etc., and not necessarily as advantageous. As used herein, "or" is intended to mean an inclusive "or" rather than an exclusive "or". In addition, "a" and "an" as used in this application are generally be construed to mean "one or more" unless specified otherwise or clear from context to be directed to a singular form. Also, at least one of A and B and/or the like generally means A or B or both A and B. Furthermore, to the extent that "includes", "having", "has", "with", and/or variants thereof are used in either the detailed description or the claims, such terms are intended to be inclusive in a manner similar to the term "comprising"..

Also, although the disclosure has been shown and described with respect to one or more implementations, equivalent alterations and modifications will occur to others skilled in the art based upon a reading and understanding of this specification and the annexed drawings. The disclosure includes all such modifications and alterations and is limited only by the scope of the following claims. In particular regard to the various functions performed by the above described components (e.g., elements, resources, etc.), the terms used to describe such components are intended to correspond, unless otherwise indicated, to any component which performs the specified function of the described component (e.g., that is functionally equivalent), even though not structurally equivalent to the disclosed structure. In addition, while a particular feature of the disclosure may have been disclosed with respect to only one of several implementations, such feature may be combined with one or more other features of the other implementations as may be desired and advantageous for any given or particular application.

## Claims

1. A system (100) for facilitating concurrent connectivity between a server and multiple routers, comprising:
a virtual switch (108) configured to:
connect a first server (110) to a first router (104) corresponding to a first IP subnet;
connect the first server (110) to a second router (106) corresponding to a second IP subnet; and
route a communication packet associated with the first server (110) through at least one of the first router (104) or the second router (106) based upon routing criteria, and **characterized by** the routing criteria comprise a load balancing routing criteria between the first router (104) and the second router (106) and/or a fail-over routing criteria specifying that the first router (104) is to be used if the second router (106) fails or that the second router (106) is to be used if the first router (104) fails, and/or are based upon an equal-cost multi-path (EMCP) distribution utilizing a Layer 3 teaming mode associated with a Layer 3 network architecture.

2. The system (100) of claim 1, the virtual switch (108) connecting the first server (104) to a Layer 3 network architecture comprising the first router as a first leaf router and the second router (106) as a second leaf router.

3. The system (100) of claim 1, the first server (110) comprising one or more virtual machines (112, 114, 116), and the virtual switch (108) configured to route communication packets associated with the one or more virtual machines (112, 114, 116).

4. The system (100) of claim 1, the virtual switch (108) configured to concurrently connect the first server (110) to the first router (104) and the second router (106).

5. A method for facilitating concurrent connectivity between a server and multiple routers, the method being performed by a virtual switch (108) and comprising:
establishing a first connection (122) between a first server (110) and a first router (104);
establishing a second connection (124) between the first server (104) and a second router (106);
receiving a communication packet associated with the first server (110);
inserting a destination MAC address for the first router (104) or the second router (106) into the communication packet to create a modified communication packet, and **characterized by** the inserting comprising: identifying the destination MAC address based upon a routing criteria comprising at least one of a load balancing routing criteria or a fail-over routing criteria or an equal-cost multi-path (ECMP) distribution utilizing a Layer 3 teaming mode associated with a Layer 3 network architecture; and
sending the modified communication packet to either the first router (104) or the second router (106) based upon the destination MAC address for routing to a destination.

6. The method of claim 5, comprising:
facilitating MAC address offloading with respect to a virtual router associated with the first server (110).

## Patentansprüche

1. System (100) zum Ermöglichen von gleichzeitiger Konnektivität zwischen einem Server und mehreren Routern, das Folgendes aufweist:
einen virtuellen Switch (108), der für Folgendes konfiguriert ist:
Verbinden eines ersten Servers (110) mit einem ersten Router (104) entsprechend einem ersten IP-Subnetz;
Verbinden des ersten Servers (110) mit einem zweiten Router (106) entsprechend einem zweiten IP-Subnetz; und
Routen eines Kommunikationspakets, das dem ersten Server (110) zugeordnet ist, durch mindestens einen des ersten Routers (104) oder des zweiten Routers (106) basierend auf Routing-Kriterien,
und **dadurch gekennzeichnet, dass**
die Routing-Kriterien ein Lastenausgleich-Routing-Kriterium zwischen dem ersten Router (104) und dem zweiten Router (106) und/oder ein Ausfallsicherung-Routing-Kriterium aufweisen, das spezifiziert, dass der erste Router (104) zu verwenden ist, wenn der zweite Router (106) versagt, oder der zweite Router (106) zu verwenden ist, wenn der erste Router (104) versagt, und/oder auf einer Equal-Cost-Multipath(EMCP)-Verteilung basieren, die einen Schicht-3-Gruppenbildungsmodus verwendet, der einer Schicht-3-Netzwerkarchitektur zugeordnet ist.

2. System (100) nach Anspruch 1, wobei der virtuelle Switch (108) den ersten Server (104) mit einer Schicht-3-Netzwerkarchitektur verbindet, die den ersten Router als ersten LEAF-Router und den zweiten Router (106) als zweiten LEAF-Router aufweist.

3. System (100) nach Anspruch 1, wobei der erste Server (110) eine oder mehrere virtuelle Maschinen (112, 114, 116) aufweist und der virtuelle Switch (108) konfiguriert ist, um Kommunikationspakete, die der einen oder den mehreren virtuellen Maschinen (112, 114, 116) zugeordnet sind, zu routen.

4. System (100) nach Anspruch 1, wobei der virtuelle Switch (108) konfiguriert ist, um gleichzeitig den ersten Server (110) mit dem ersten Router (104) und dem zweiten Router (106) zu verbinden.

5. Verfahren zum Ermöglichen von gleichzeitiger Konnektivität zwischen einem Server und mehreren Routern, wobei das Verfahren durch einen virtuellen Switch (108) durchgeführt ist und Folgendes aufweist:
Herstellen einer ersten Verbindung (122) zwischen einem ersten Server (110) und einem ersten Router (104);
Herstellen einer zweiten Verbindung (124) zwischen dem ersten Server (104) und einem zweiten Router (106);
Empfangen eines Kommunikationspakets, das dem ersten Server (110) zugeordnet ist;
Eingeben einer MAC-Zieladresse für den ersten Router (104) oder den zweiten Router (106) in das Kommunikationspaket, um ein verändertes Kommunikationspaket zu schaffen,
und **dadurch gekennzeichnet, dass** das Eingeben Folgendes aufweist:
Identifizieren der MAC-Zieladresse basierend auf einem Routing-Kriterium, das mindestens eine/s eines Lastenausgleich-Routing-Kriteriums oder eines Ausfallsicherung-Routing-Kriteriums oder einer Equal-Cost-Multipath-Verteilung (ECMP) aufweist, die einen Schicht-3-Gruppenbildungsmodus verwendet, der einer Schicht-3-Netzwerkarchitekur zugeordnet ist; und
Senden des veränderten Kommunikationspakets zu entweder dem ersten Router (104) oder dem zweiten Router (106) basierend auf der MAC-Zieladresse zum Routen zu einem Ziel.

6. Verfahren nach Anspruch 5, das Folgendes aufweist:
Ermöglichen eines MAC-Adressenentladens in Bezug auf einen virtuellen Router, der dem ersten Server (110) zugeordnet ist.

## Revendications

1. Système (100) pour faciliter la connectivité simultanée entre un serveur et plusieurs routeurs, comprenant :
un commutateur virtuel (108) configuré pour :
connecter un premier serveur (110) à un premier routeur (104) correspondant à un premier sous-réseau IP ;
connecter le premier serveur (110) à un second routeur (106) correspondant à un second sous-réseau IP ;
acheminer un paquet de communication associé au premier serveur (110) à travers au moins un routeur choisi entre le premier routeur (104) et le second routeur (106) en fonction des critères de routage,
et **caractérisé en ce que**
les critères de routage comprennent un critère de routage avec équilibrage de la charge entre le premier routeur (104) et le second routeur (106) et/ou un critère de routage substitutif spécifiant que le premier routeur (104) doit être utilisé si le second routeur (106) tombe en panne ou que le second routeur (106) doit être utilisé si le premier routeur (104) tombe en panne, et/ou sont basés sur une distribution entre parcours multiples à coût égal (EMCP - Equal-Cost Multi-Path) utilisant un mode de coopération de niveau 3 associé à une architecture de réseau de niveau 3.

2. Système (100) selon la revendication 1, dans lequel le commutateur virtuel (108) qui relie le premier serveur (104) à une architecture de réseau de niveau 3 comprenant le premier routeur en tant que premier routeur de dernier niveau et le second routeur (106) en tant que second routeur de dernier niveau.

3. Système (100) selon la revendication 1, le premier serveur (110) comprenant une ou plusieurs machines virtuelles (112, 114, 116) et le commutateur virtuel (108) configuré pour acheminer des paquets de communication associés à une ou plusieurs machines virtuelles (112, 114, 116).

4. Système (100) selon la revendication 1, dans lequel le commutateur virtuel (108) est configuré pour connecter simultanément le premier serveur (110) au premier routeur (104) et au second routeur (106).

5. Procédé pour faciliter la connectivité simultanée entre un serveur et plusieurs routeurs, le procédé étant exécuté par un commutateur virtuel (108) et comprenant :
l'établissement d'une première connexion (122) entre un premier serveur (110) et un premier routeur (104) ;
l'établissement d'une seconde connexion (124) entre le premier serveur (104) et un second routeur (106) ;
la réception d'un paquet de communication associé au premier serveur (110) ;
l'introduction d'une adresse MAC de destination pour le premier routeur (104) ou le second routeur (106) dans le paquet de communication de façon à créer un paquet de communication modifié, **caractérisé par** l'introduction, comprenant : l'identification de l'adresse MAC de destination en fonction de critères de routage
comprenant au moins l'un des critères de routage consistant en un équilibrage de charge ou un critère de routage substitutif ou une distribution entre parcours multiples à coût égal (EMCP) en utilisant un mode de coopération de niveau 3 associé à une architecture de réseau de niveau 3 ; et
l'envoi du paquet de communication modifié soit au premier routeur (104) soit au second routeur (106) en fonction de l'adresse MAC de destination pour l'acheminement vers une destination.

6. Procédé selon la revendication 5, comprenant :
un déchargement plus facile de l'adresse MAC par rapport à un routeur virtuel associé au premier serveur (110).
